# EUROPÄISCHE PATENTSCHRIFT

(11) **EP 0 599 061 B1**
(45) Veröffentlichungstag und Bekanntmachung des Hinweises auf die Patenterteilung: **27.12.1995**
(21) Anmeldenummer: 93117058.3
(22) Anmeldetag: 21.10.1993
(51) Int. Cl.: F01N 9/00, F01N 3/20, F01N 3/22

(54) **Verfahren zur Abgasentgiftung einer Brennkraftmaschine**
Method to purify the exhaust gas of an internal combustion engine
Méthode de purification de gaz d'échappement d'un moteur à combustion interne

(30) Priorität: 20.11.1992 DE 4239081
(43) Veröffentlichungstag der Anmeldung: 01.06.1994
(73) Patentinhaber: Pierburg Aktiengesellschaft, 41460 Neuss (DE)
(72) Erfinder: Härtel, Günter, D-41470 Neuss (DE); Schürfeld, Armin, D-40670 Meerbusch (DE); Röttges, Riedel, D-47918 Tönisvorst (DE); Hullmann, Matthias, D-41564 Kaarst (DE)

(56) Entgegenhaltungen:
- EP-A- 0 422 432
- EP-A- 0 469 170
- DE-A- 2 219 371
- DE-A- 3 835 939
- US-A- 4 233 811

## Beschreibung

Die Erfindung betrifft ein Verfahren zur Abgasentgiftung einer Brennkraftmaschine nach dem Oberbegriff des Anspruchs 1.

Entscheidend für die Schadstoffemission einer Brennkraftmaschine sind die ersten ein bis zwei Minuten nach dem Starten bei kalter Maschine.

In dieser Phase werden ca. 70-80% der gesamten Emission von HC und CO ausgestoßen. Da in diesem Zeitraum der Katalysator noch keine Betriebstemperatur aufweist, emittiert der Motor quasi die Rohemission.

Aus der PIERBURG-Produktinformation 'Elektrische Sekundärluftgebläse', Nr. 5/4 00-151.01, 9/91, veröffentlicht auf der Internationalen Automobil Ausstellung, Frankfurt/Main, 1991, ist ein Sekundärluftsytem entnehmbar, das bei einer Brennkraftmaschine die Einblasung von Sekundärluft in die Abgaskrümmer während der kalten, noch nicht betriebsbereiten Phase des Katalysators vorsieht.

Hierdurch wird erreicht, daß die Schadstoffe CO und HC, die vermehrt in der Kaltphase durch eine motorseitige Luftzahl von Lambda < 1 entstehen, abgesenkt werden und dem Katalysator Wärme zugeführt wird zur Erreichung schnellerer Betriebsbereitschaft nach dem Kaltstart. Das Sekundärlufteinblassystem besteht aus einem Luftgebläse, einem oder mehreren Rückschlagventilen und einem Abschaltventil.

Überlegungen, wie die Betriebsbereitschaft ausgehend von diesem Stand der Technik noch schneller erreicht werden kann, führten im Zusammenhang mit diesem Sekundärluftsystem zu der Aufgabe der vorliegenden Erfindung, zur Erfüllung der jeweiligen Anforderungen ein Verfahren aufzufinden, mit dem die Betriebsbereitschaft einer Brennkraftmaschine bzw. eines Katalysators in Bezug auf eine Abgasentgiftung schneller erreicht werden kann.

Diese Aufgabe ist durch die im Kennzeichen des Patentanspruchs 1 angegebenen Verfahrens- merkmale gelöst worden. Vorteilhafte Weiterbildungen sind mit den Unteransprüchen angegeben.

Mit den erfindungsgemäßen Verfahren kann die nach dem Kaltstart der Brennkraftmaschine auftretende Emission von HC und CO erheblich verringert bzw. deren Austrittszeit verkürzt werden.

Mit dem Verfahren ist eine einfache Lösung gefunden worden, die mit einem bekannten Sekundärlufteinblasungssystem und ggf mit einem Brennersystem realisierbar ist, mit dem der Katalysator und die Lambda-Sonde durch den Brennstoff der Brennkraftmaschine beheizt werden.

Von einer Brennkraftmaschine 1 führt eine Abgasleitung 2 zu einem Brenner 3, welcher über eine Abgas-Mischstrecke 4 mit einem Katalysator 5 verbunden ist. Der Brenner 3 besteht aus einer Gemisch-Aufbereitungskammer 6, einer Gemisch-Austrittsblende 7, einer Brennkammer 8 und einem Brennkammeraustritt 9. In die Gemisch-Aufbereitungskammer 6 mündet eine Zerstäuberdüse 10, der über eine Brennstoffleitung 11 Brennstoff und über eine Brennluftleitung 12 Luft zugeführt wird.

Der Brennstoff für das Brennersystem wird einer Kraftstoff-Verteilerleitung 13 entnommen, welche Einspritzventile 14, die in Ansaugluftkanälen 15 der Brennkraftmaschine angeordnet sind, versorgt. In der Brennstoffleitung 11 sind ein Sicherheits-Absperrventil 16, ein Brennstoffregler 17 und ein Brennstoff-Absperrventil 18 angeordnet.

Die Brennluft für das Brennersystem wird von einem Sekundärluftgebläse 19 aus der Atmosphäre über einen Luftfilter (zeichnerisch nicht dargestellt) angesaugt und in eine sich verzweigende Sekundärluft-Druckleitung 20 gefördert. Die abzweigende Brennluftleitung 12 führt über ein Brennluft-Absperrventil 21 zur Zerstäuberdüse 10. Die Sekundärluft-Druckleitung 20 führt einerseits zu einem Sekundärluft-Druckregler 22 und von dort weiter zu einem Sekundärluft-Absperr- und Taktventil 23. Die Zuteilung der Sekundärluft kann alternativ entweder über eine Sekundärluft-Verteilerleitung 24 und den Zylinder-Auslaßkanälen zugeordnete Einblasröhrchen 25 in Nähe der Auslaßventile im Zylinderkopf der Brennkraftmaschine erfolgen oder über eine gestrichelt dargestellte Leitung 26 dem Sammelrohr der Abgasleitung 2 zugeteilt werden. Die im Überschuß geförderte Sekundärluft wird vom Sekundärluft-Druckregler 22 über eine Austrittsleitung 27 in die Atmosphäre abgeblasen. Um den Einfluß des Abgasgegendruckes auf die Brennluft- und Sekundärluftmenge zu vermeiden, ist der rückwärtige Membranraum des Sekundärluft-Druckreglers 22 bei Betrieb des Sekundärluftgebläses 19 über eine Referenzdruckleitung 38, ein Referenzdruck-Umschaltventil 39 und eine Abgasdruck-Leitung 40 mit einer der Brennkammern des Brenners 3, hier mit der Gemisch-Aufbereitungskammer 6, oder der Abgasleitung 2 verbunden. Bei Stillstand des Sekundärluftgebläses 19 wird der Sekundärluft-Druckregler 22 über das Referenzdruck-Umschaltventil 39 über eine Atmosphärendruck-Leitung 41 mit dem Atmosphärendruck verbunden. Zur Entflammung des Brenngemisches in der Brennkammer 8 dient eine Zündelektrode 28, welche über ein Zündmodul 29 angesteuert wird. Zur Überwachung der Brennerfunktion kann ein Flammwächter 30 im Bereich der Gemisch-Aufbereitungskammer 6 oder der Brennkammer 8 angeordnet werden. Weiterhin kann zur Erfassung des dem Katalysator 5 zugeführten Abgasgemisches unmittelbar zwischen der Abgas-Mischstrecke 4 und dem Katalysator 5 zusätzlich oder alternativ zum konventionellen Einbauort eine Lambda-Sonde 31 vorgesehen werden. Ein Temperatursensor 32 dient zur Erfassung der Katalysator-Temperatur an der Außenwand oder innerhalb des Katalysators 5. Alle Komponenten des Brennersystems sind über Anschlußleitungen 33 mit einem elektronischen Steuergerät 34 verbunden, das eine bauliche Einheit mit dem Brennkraftmaschinen-Managementsteuergerät bildet oder eine Schnittstelle mit diesem aufweist.

Eine luftgestützte Zerstäubung des Brennstoffes erfolgt in der Gemisch-Aufbereitungskammer 6 durch den zentral an der Zerstäuberdüse 10 austretenden Teilstrom der Brennluft. Durch die radial austretende Brennluft wird der um die Mittelachse zerstäubte Brennstoff (Sprühkegel) mit einem Luftmantel umgeben, wodurch die Entflammung mittels der Zündelektrode 28 und die Stabilität der Flamme in der Brennkammer 8 verbessert wird. Die Flamme beginnt im Bereich der Gemisch-Austrittsblende 7 und erstreckt sich bis in den Bereich des Brennkammeraustritts 9. Das durch die Abgasleitung 2 zuströmende Motorabgas darf sich erst im Bereich des Brennkammeraustritts 9 mit dem Abgas der Brennkammer 8 vermischen, da sonst die Verbrennung in der Brennkammer beeinträchtigt wird. Die Brennkammer ist deshalb so gestaltet, damit sie im Bereich der Flamme geschlossen und im Bereich des Brennkammeraustritts 9 einen verringerten Querschnitt aufweist. Die beiden Abgasströme treffen erst im Bereich der ausbrennenden Flamme bzw. von Durchtrittsbohrungen 35 aufeinander, wobei eine Vermischung der beiden Abgasströme im Bereich der Abgas-Mischstrecke 4 durch die Durchtrittsbohrungen 35 gefördert werden soll. Die Lambda-Sonde 31 ist stromab der Abgas-Mischstrecke 4 angeordnet, um die Zusammensetzung des Gesamtgemisches nach abgeschlossener Vermischung messen zu können.

Das Sekundärluftgebläse 19 wird beim Einschalten der Zündung und nicht betriebswarmem Katalysator 5 in Betrieb gesetzt und fördert mit voller Leistung. Die Versorgung des Brenners 3 mit Brennluft ist nur so lange erforderlich, bis nach ca. 15 bis 20 Sekunden der vordere Teil des Katalysators 5 betriebswarm ist bzw. im Katalysator ein vorgegebener Temperaturschwellwert erreicht wird. Der Brenner 3 wird vorzugsweise im Mischungsverhältnis auf Lambda knapp über 1 eingestellt. Für konstante Brennerleistung und konstantes Lambda ist deshalb auch eine konstante Brennerluftmenge pro Zeiteinheit erforderlich. Da sich im Laufe der Betriebszeit die Förderkennlinie des Sekundärluftgebläses 19 verändern kann und die Fördermenge auch vom Abgasgegendruck abhängig ist, wird zur Vermeidung einer Brennluftmengen-Änderung der Sekundärluft-Druckregler 22 benötigt.

Bei Betrieb des Brenners wird das Brennluft-Absperrventil 21 geöffnet und die vom Sekundärluft-Gebläse 19 geförderte Luft zur Zerstäuberdüse 10 gefördert. Der konzentrische Austrittsspalt zur Zerstäubung des Brennstoffes und Bohrungen für die radial austretende Luft (nicht dargestellt) sind so bemessen, daß bei einem bestimmten Druck in der Brennluftleitung 12 genau die vom Brenner benötigte Luftmenge zugeteilt wird. Entsprechend diesem Druck strömt die im Überschuß geförderte Luftmenge. Für den Fall, daß sich die Förderkennlinie des Sekundärluftgebläses 19 verändert hat, wirkt sich diese Veränderung nicht auf die zugeteilte Brennluftmenge aus, da durch die Funktion des Sekundärluft-Druckreglers 22 der Druck erhalten bleibt und sich nur die im Überschuß geförderte Menge ändert. Hierbei wurde zunächst vorausgesetzt, daß der Abgasgegendruck vernachlässigbar gering ist.

Im Bereich höherer Drehzahl und Last steigt der Abgasgegendruck jedoch auf Werte an, die zu einer Verringerung der Druckdifferenz an der Zerstäuberdüse 10 führen, wodurch sich auch die zugeteilte Brennluft verringert und der Lambda-Wert in Richtung fett verändert wird. Um diese Störgröße zu kompensieren, wird der Abgasgegendruck über die Abgasdruck-Leitung 40, das Referenzdruck-Umschaltventil 39 und die Referenzdruckleitung 38 in die Membrankammer des Sekundärluft-Druckreglers 22 geleitet.

Damit erhöht sich der eingeregelte Druck des Druckreglers um den Betrag des Abgasgegendruckes, wodurch gewährleistet wird, daß die Druckdifferenz an der Zerstäuberdüse 10 und damit auch die Brennluftmenge im gesamten Kennfeld der Brennkraftmaschine weitgehend konstant bleiben, vorausgesetzt, das Sekundärluftgebläse 19 ist in der Lage, die Brennluftmenge gegen den erhöhten Druck im Überschuß zu fördern. Die im Überschuß geförderte Sekundärluft wird in dem hier beschriebenen Beispiel entweder über das Sekundärluft-Absperr- und Taktventil 23 dem Motorabgas der Einzelzylinder über die Einblasröhrchen 25 im Bereich der Auslaßventile zugeführt oder - wie gestrichelt dargestellt - über die Leitung 26 der Abgasleitung 2 (Sammelrohr) beigemischt.

Im ersteren Fall kann die Sekundärluft im Bereich der Auslaßventile zur Verbrennung von CO und HC genutzt werden. Selbstverständlich ist es auch möglich, auf die Beimischung der im Überschuß geförderten Sekundärluft zum Abgas zu verzichten und diese nach dem Sekundärluft-Druckregler über die Austrittsleitung 27 in die Atmosphäre abzublasen.

Erfindungsgemäß ist nach Anspruch 1 hierfür ein Verfahren vorgesehen, bei dem die Brenngemischbildung in Abhängigkeit von Betriebsparametern der Brennkraftmaschine wie Drehzahl, Drosselklappenstellung und Motortemperatur in der Art gesteuert wird, daß die Brennkraftmaschine in einem Bereich guten Betriebsverhaltens mit Luftmangel zu betreiben ist, und daß, nachdem Lambda-Sonde und wenigstens teilweise der Katalysator Betriebstemperatur erreicht haben, die Sekundärlufteinblasung aufrecht erhalten bleibt, deren Menge und Zeitdauer jedoch in Abhängigkeit von Betriebsparametern der Brennkraftmaschine wie Drehzahl, Drosselklappenstellung und Motortemperatur in der Art gesteuert wird, daß die Lambda-Sonde Luftüberschuß im Gesamtabgasstrom feststellt und dadurch das Brenngemisch über die Lambda = 1-Regelung angefettet wird, so daß die Brennkraftmaschine in einem Bereich guten Betriebsverhaltens zu betreiben ist.

Bei diesem Verfahren erfolgt die Zumessung der Sekundärluft durch Ansteuerung des Sekundärluft-Absperr-Taktventils 23 oder eines elektronisch ansteuerbaren Stellmotors des Sekundärluft-Druckreglers 22 durch die Signale des elektronischen Steuergerätes 34.

Voraussetzung hierfür ist allerdings, daß auch die Lambda-Sonde 31 bereits ihre Betriebstemperatur erreicht hat und die Förderung von Sekundärluft über die Anwärmphase des Katalysators 5 hinaus mit dem Sekundärluftgebläse 19 aufrechterhalten wird. Die Zumessung der Sekundärluft wird hierbei durch Ansteuerung des Sekundärluft-Absperr- und Taktventils 23 von der Lambda-Regelung übernommen. Falls erforderlich, kann das Sekundärluft-Absperr- und Taktventil 23 auch als 2/3-Wege-Ventil ausgeführt werden (Umschaltung von Zumessen und Abblasen in die Atmosphäre), um damit die Zuteilung kleiner Sekundärluftmengen zu verbessern. Mit zunehmender Abmagerungsmöglichkeit der Brennkraftmaschine während des Warmlaufs muß die Sekundärluftmenge mittels der Lambda-Regelung fortlaufend zurückgenommen werden bis das Motorabgas ohne Sekundärluftzugabe Lambda = 1 erreicht. Danach kann das Sekundärluft-Gebläse 19 abgeschaltet werden.

Die Brennstoffzuführung erfolgt bei Verwendung des Brennersystems zur schnellen Aufheizung des Katalysators vorzugsweise durch die von der Kraftstoffverteilerleiste abzweigende Brennstoffleitung 11. Die Zumessung einer konstanten Brennstoffmenge erfolgt mittels des Brennstoffreglers 17 über die Brennstoffleitung 11 und das Brennstoff-Absperrventil 18 und diese wird der Zerstäuberdüse 10 zugeführt. Die vom Brennstoffregler zugemessene Menge ist in weiten Grenzen unabhängig vom Druck in der Brennstoffleitung 11 und vom Druck in der Gemisch-Aufbereitungskammer 6. Das Sicherheits-Absperrventil 16 dient zur Vermeidung von unkontrolliertem Brennstoffaustritt für den Fall eines Defekts an der Brennstoffleitung 11 (Crash-Test), wenn der Durchsatz im Brennstoffregler 17 über den Normalwert ansteigt, und unterbricht den Durchfluß des Brennstoffes so lange, wie Überdruck in der Brennstoffleitung 11 stromauf des Sicherheits-Absperrventils 16 vorhanden ist.

Die Brennstoffmenge kann durch Variation der Druckdifferenz am Brennstoffreglers 17, beispielsweise mittels eines elektronisch ansteuerbaren Hubmagneten, verändert werden.

Es ist besonders vorteilhaft, wenn das Brennersystem, mit dem der Katalysator und die Lambda-Sonde durch den Brennstoff der Brennkraftmaschine beheizt werden, über den Zeitpunkt, an dem der Katalysator wenigstens teilweise Betriebstemperatur erreicht hat, hinaus betrieben wird bis zum Erreichen der vollständigen Betriebstemperatur, wobei dabei das Brennersystem-Abgas im Gesamtabgasstrom enthalten ist.

In Verbindung mit dem elektronischen Steuergerät 34 ist es möglich, sowohl die Brennerleistung wie auch das Mischungsverhältnis des Brenngemisches abhängig von Betriebsparametern der Brennkraftmaschine oder des Brennersystems in der gewünschten Weise den jeweiligen Anforderungen anzupassen. Es hat sich als vorteilhaft herausgestellt, wenn das Brennersystem durch eine Vorzugsschaltung zeitlich einige Sekunden vor dem Start der Brennkraftmaschine gestartet wird.

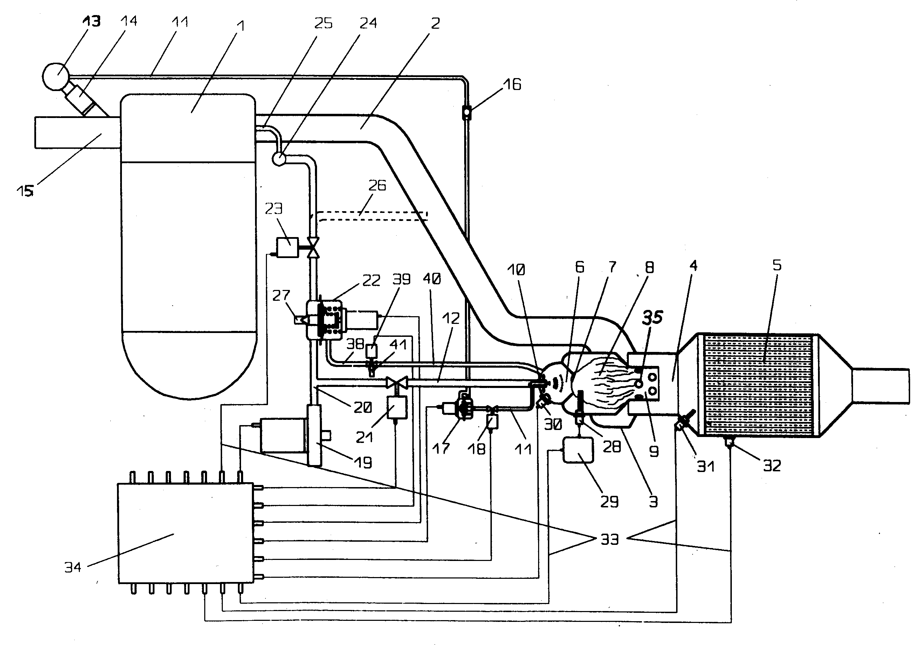

## Patentansprüche

1. Verfahren zur Abgasentgiftung einer Brennkraftmaschine während der Kaltlaufphase nach dem Starten in Verbindung mit einer Sekundärlufteinblasung in die Abgasleitung zur Nachverbrennung und Beheizung einer Lambda-Sonde und eines Katalysators, wobei die Brenngemischbildung in Abhängigkeit von Betriebsparametern der Brennkraftmaschine wie Drehzahl, Drosselklappenstellung und Motortemperatur in der Art gesteuert wird, daß die Brennkraftmaschine in einem Bereich guten Betriebsverhaltens mit Luftmangel zu betreiben ist, dadurch gekennzeichnet, daß, nachdem Lambda-Sonde und wenigstens teilweise der Katalysator Betriebstemperatur erreicht haben, die Sekundärlufteinblasung aufrecht erhalten bleibt, deren Menge und Zeitdauer jedoch in Abhängigkeit von Betriebsparametern der Brennkraftmaschine wie Drehzahl, Drosselklappenstellung und Motortemperatur in der Art gesteuert wird, daß die Lambda-Sonde Luftüberschuß im Gesamtabgasstrom feststellt und das Brenngemisch über die Lambda = 1-Regelung angefettet wird, so daß die Brennkraftmaschine in einem Bereich guten Betriebsverhaltens zu betreiben ist, wobei die Sekundärluftmenge fortlaufend zurückgenommen wird, bis das Motorabgas ohne Sekundärluftzugabe Lambda = 1 erreicht.

2. Verfahren nach Anspruch 1, dadurch gekennzeichnet, daß ein Brennersystem, mit dem der Katalysator und die Lambda-Sonde durch den Brennstoff der Brennkraftmaschine beheizt werden, über den Zeitpunkt, an dem der Katalysator wenigstens teilweise Betriebstemperatur erreicht hat, hinaus betrieben wird bis zum Erreichen der vollständigen Betriebstemperatur, wobei dabei das Brennersystem-Abgas im Gesamtabgasstrom enthalten ist.

3. Verfahren nach Anspruch 2, dadurch gekennzeichnet, daß das Brennersystem über Steuersignale eines elektronischen Steuergerätes (34) abhängig von Betriebsparametern der Brennkraftmaschine oder des Brennersystems gesteuert wird.

4. Verfahren nach Anspruch 3, dadurch gekennzeichnet, daß das Brennersystem durch eine Vorzugsschaltung zeitlich einige Sekunden vor dem Start der Brennkraftmaschine gestartet wird.

## Claims

1. Method to purify the exhaust gas of an internal combustion engine during the cold running phase after the start in combination with a secondary air injection into the exhaust gas pipe for the post-combustion and heating of a lambda probe and of a catalyst, wherein the combustible mixture formation is controlled as a function of operating parameters of the internal combustion engine such as speed, throttle valve position and engine temperature in such a way that the internal combustion engine is operated in a range of good operating characteristics with deficiency of air, characterised in that, after lambda probe and at least in part the catalyst have reached operating temperature, the secondary air injection is maintained, but the quantity and duration of the latter are controlled as a function of operating parameters of the internal combustion engine such as speed, throttle valve position and engine temperature in such a way that the lambda probe detects air excess in the overall exhaust gas flow and the combustible mixture is enriched slightly above the lambda=1 setting, so that the internal combustion engine can be operated in a range of good operating characteristics, wherein the amount of secondary air is reduced progressively until the engine exhaust gas reaches lambda=1 without the addition of secondary air.

2. Method according to claim 1, characterised in that a burner system, with which the catalyst and the lambda probe are heated by the fuel of the internal combustion engine, is operated beyond the time at which the catalyst has at least in part reached operating temperature until the complete operating temperature is reached, wherein the burner system exhaust gas is in so doing contained in the overall exhaust gas flow.

3. Method according to claim 2, characterised in that the burner system is controlled through control signals of an electronic controller (34) as a function of operating parameters of the internal combustion engine or of the burner system.

4. Method according to claim 3, characterised in that the burner system is started by means of a preferred switching operation a few seconds in time before the start of the internal combustion engine.

## Revendications

1. Procédé de décontamination des gaz d'échappement d'un moteur à combustion interne pendant la phase de marche à froid après le démarrage, en association avec une injection d'air secondaire dans le tuyau d'échappement, en vue d'une post-combustion et du chauffage d'une sonde lambda et d'un catalyseur, la formation du mélange combustible étant commandée en fonction de paramètres de service du moteur à combustion interne, tels que vitesse de rotation, position du papillon des gaz et température du moteur, de sorte que le moteur à combustion interne soit exploitable dans une plage d'une bonne tenue en service, en défaut d'air, caractérisé en ce que, après que la sonde lambda et, en partie au moins, le catalyseur aient atteint la température de service, l'injection d'air secondaire est mainenue, le débit et la durée de cette injection étant toutefois commandés en fonction de paramètres de service du moteur à combustion interne, tels que vitesse de rotation, position du papillon et température du moteur, de sorte que la sonde lambda établit un excès d'air dans le flux total des gaz d'échappement, et que le mélange combustible est enrichi au-delà de la régulation lambda = 1, si bien que le moteur à combustion interne est exploitable dans une plage d'une bonne tenue en service, le débit d'air secondaire étant réduit en continu, jusqu'à ce que les gaz d'échappement atteignent lambda = 1 sans addition d'air secondaire.

2. Procédé suivant la revendication 1, caractérisé en ce qu'un système de brûleur, par lequel sont chauffés le catalyseur et la sonde lambda, par le combustible du moteur à combustion interne, fonctionne au-delà de l'instant où le catalyseur a atteint, en partie au moins, la température de service, jusqu'à l'obtention de la température de service intégrale, les gaz brûlés du système de brûleur étant alors compris dans le flux total des gaz d'échappement.

3. Procédé suivant la revendication 2, caractérisé en ce que le système de brûleur est commandé, par des signaux pilotes d'un appareil de commande électronique (34), en fonction de paramètres de service du moteur à combustion interne ou du système de brûleur.

4. Procédé suivant la revendication 3, caractérisé en ce que le système de brûleur est mis en marche, dans le temps, quelques secondes avant le démarrage du moteur à combustion interne par un circuit prioritaire.
